# EUROPEAN PATENT APPLICATION

(11) **EP 1 629 927 A1**
(43) Date of publication of application: **01.03.2006**
(21) Application number: 04020529.6
(22) Date of filing: 30.08.2004
(51) Int. Cl.: B23K 11/06, B23K 26/24, B23K 26/42, B23K 26/32, B23K 28/02

(54) **Method for welding a first and a second part with an hybrid welding process based on resistance seam welding followed by seam laser welding**

(71) Applicant: Ford Global Technologies, LLC, Dearborn, MI 48126 (US)
(72) Inventor: Larsson, Gert, 443 41 Grabo (SE); Larsson, Lars-Ola, 437 35 Lindome (SE)
(74) Representative: Widahl, Jenny Marie

(57) **Abstract**

This invention relates to a manufacturing method for interconnecting at least a first and a second body part (4,5) of a sheet material to form a part of a vehicle body, the method comprising the steps of:
- arranging said first and second body parts (4,5) so that they essentially overlap and abut each other in an overlapping area (6),
- exposing a welding zone (10) of said overlapping area (6) to a hybrid welding process in order to interconnect said first and second body parts (4,5) in said overlapping area (6), the hybrid welding process comprising at least a first resistance seam welding step with rollers (7,8) and a subsequent laser welding step with laser head (2).

## Description

### Technical field of the invention

This invention relates to a manufacturing method for interconnecting at least a first and a second body part of a sheet material to form a part of a vehicle body.

### Description of background art

Within the vehicle industry, different welding methods are today commonly used to join vehicle body parts with each other.

One method that has increased in popularity during the last years is laser welding, in which a beam of laser radiation is used to perform a weld. Many different kinds of laser welding is available today.

However, laser welding is often associated with a plurality of issues that need to be considered. One issue is that the surface conditions of the material to be welded are critical, and zinc coatings and oxide layers on the material to be welded may cause quality problems in the welded connection, in terms of porosity, undercut or even irregular weld geometry. The problems experienced when using laser welding may be even greater in case stamping or forming lubricants and/or delivery oils has been applied on the material prior to welding, and in this case efforts has to be made to clean the material thoroughly before welding takes place in order to avoid problems. Further, clamping of body parts to be welded is critical in laser welding, in order to obtain an acceptable weld result, and sufficient clamping may be hard to achieve. Only minor gaps are allowed when generating a weld, due to the small laser spot and the high energy content. On the other hand, a zero gap condition may cause porosity in the weld, for instance due to zinc evaporation when welding in coated steel sheet material. Such porosity results in a decreased strength, corrosion problems and also results in a poor apearance which may be negative if the weld is placed where it is visible. Hence, it is difficult and costly to provide a high quality laser weld, and hence alternative methods are desired. Also, due to the factors mentioned above, laser velding is unsuitable for more advanced welding situations, such as interconnection of three or more body parts with each other in a single welding operation.

An alternative method that is commonly used today is resistance spot welding, in which an often cylindrical electrode is used to spotwise apply an electrical current to an overlapping portion of two body parts, and thereby achieve a weld. This method works well for many applications. However, one issue with resistance spot welding is that the cylindrical electrode is quite space consuming, and hence this method requires a rather big flange width which may be disadvantageous in certain applications, and also adds weight to the construction. Moreover, the resulting weld is discontinuous, which may be disadvantageous from a strenght perspective.

A further development of the resistance spot welding is resistance seam welding, in which the application of electric current and mechanical pressure is used to create a weld in a stack comprising pieces of metal, or other electrically conducting materials. The pieces of metal are pressed together by letting them pass between two wheel shaped weld electrodes and at the same time, the electrodes conduct an electric current to the pieces of metal as they are forged together which results in a weld. The wheel shaped electrodes may be made thinner that the corresponding cylindrical electrode used in resistance spot welding, and hence the flange width may be reduced. Also, this method provides a continuous weld, which is desireable in terms of weld strength. However, resistance seam welding is also associated with some undesirable issues. Among other things, it is difficult to achieve a consistent weld quality, especially in high strength materials and when joining sheets of different materials or different material grades. This is due to the fact that the heat generated in the stack due to the resistance welding will not be generated evenly, but will be generated in the positions of the stack having the highest electrical resistance. For instance, boundry surfaces between different materials generally exhibit high resistance. Hence, the parameters of the welding procedure must be adjusted so that the desired heat is generated in low-resistance areas, while avoiding burning high-resistance areas. This may be very difficult for certain material combinations, and the complexity increases with the number of layers in the stack, as well as the resistance differences within the stack. Moreover, the sheet thickness combination is critical when using resistance seam welding, and this also puts some limitations on the use of this method. A further problem with using resistance seam welding is that a high force is required in order to close the gap between the pieces of material in the stack and get a good contact surface thembetween. An example of this problem is when joining a first of high strenght steel (such as DP600), a layer of zinc coated high strenght steel (such as DP600) and a layer of a milder steel (such as a carbon/manganese steel). Then a high force must be applied in order to join the high strenght steel layers with each other, while this high force causes a major reduction in resistance between the mild steel layer and the zinc coated high strenght steel layer, as the mild steel layer is forced into the zinc coating of the zinc coated high strenght steel layer. Consequently, alternative joining methods are desired.

Yet a problem experienced with most present interconnection methods, such as laser welding and resistance seam welding, is that they are only suitable to interconnect two parts with each other, and are hence unsuitable in situations when more that two parts are to be interconnected with a single weld.

### Summarv of the invention

Hence, an object of this invention is to provide a manufacturing method for interconnecting two or more vehicle body parts which overcomes the above problems with the prior art.

Yet an object of this invention is to provide a manufacturing method for interconnecting vehicle body parts which can improve productivity, increase quality, be fit for mass production and reduce manufacturing cost.

A further object of this invention is to provide a manufacturing method for interconnecting vehicle body parts that is capable of interconnecting three or more body parts with each other.

The above and other objects are at least in part achieved by the present invention as defined by claim 1.

The invention concerns a manufacturing method for interconnecting at least a first and a second body part of a sheet material to form a part of a vehicle body. The method comprises the steps of arranging said first and second body parts so that they essentially overlap and abut each other in an overlapping area, and exposing a welding zone of said overlapping area to a hybrid welding process in order to interconnect said first and second body parts in said overlapping area, the hybrid welding process comprising at least a first resistance seam welding step and a subsequent laser welding step. Hence, by this invention, the resulting weld will be a combination of a resistance seam weld and a laser weld. The first resistance seam welding step results in a preclamping of the first and second body part, and at the same time, the body parts are preheated so that any surface coatings, lubricants, sealants, adhesives and other residues are burnt off, creating ideal conditions for the subsequent laser welding step. Thereby, this inventive method results in a strong, high quality weld, remarkably reducing the issues normally experienced with conventional laser welding.

The total heat input from the resistance seam welding step and the laser welding step may be individually optimised for each welding step, which enables different weld results, in terms of different weld width and weld penetration. Hence, the resulting weld may be optimised, with consideration taken to materials, thickness of goods etc.

A further advantage of this invention is that weld defects like porosity, undercut or even irregular weld geometry may be eliminated or strongly reduced, since the resistance seam welding step and the laser welding step may be balanced and optimised in such a way that any drawbacks experienced with any single one of the steps may be eliminated . Due to this, the resulting weld will be of high quality and have a high strength, which in turn enables higher stiffness and improved crash and fatigue properties for the weld. Also, the flange width of the body parts may be reduced, due to reduced space requirements of the welding tools used, as compared to for instance the commonly used resistance spot welding described above. This results in weight reductions of the overall vehicle. When used for upper body parts, such as in upper A, B or C pillar sections, this flange width reduction may also result in improved vision conditions.

Also, this inventive manufacturing method may be used for a new generation of extra strength and ultra high strength steel materials. For instance, this method may be used with any one of the following materials: Dual phase (DP) materials, boron alloy steel, TRIP, CP or stainless steel. However, it shall be noted that the inventive method is suitable for use with several other materials. Many of the more resently developed steel materials are martensitic or half martensitic, which means that you want to limit any heat treatment on them in order not to affect their properties, and since you often desire to combine these in a stack with at least one milder highly shapeable steel, such as an exterior material, the inventive method combining seam resistance welding and laser welding is ideal.

Suitably, said laser welding step comprises the step of irradiating said overlapping area with a laser beam, generated by a laser source being one of a: CO₂, NdYAG or diode laser. However, it shall be noted that many other kinds of laser sources may be used in this method, and that the invention is not to be limited to the above mentioned types. For instance fiber lasers may be used. The laser source may either be a pulsed laser source or a continuous laser source, depending on what properties of the weld is to be achieved.

The first and second body parts are preferably manufactured by sheet material being electrically conducting. However, the first and/or second body parts may be constituted by more compact parts of essentially any material, as long as they are provided with a flange portion or the like of an electrically conducting material, which may constitute the overlapping area and on which the weld may be positioned.

For reasons stated above, this method is especially advantageous for welding together body part which are to constitute at least a part of one of an A, B, or C pillar of the vehicle body. However, it shall be noted that the inventive method is equally applicable to other applications, such as welding of beams surrounding a windshield, a lid covering a boot or a body sill, or any other flange joint within the vehicle body.

This manufacturing method is preferably used to interconnect three or more body parts in a single welding operation. This is possible due to the combination of the two welding methods as described above.

The above and other objects of this invention are also achieved by a welding assembly for performing the welding method described above, the welding assembly comprising a resistance seam welding unit, for performing said resistance seam welding step and a laser welding unit, for performing said laser welding step. Preferably, the resistance seam welding unit and the laser welding unit are integrated to form a single hybrid unit, in order to facilitate the set up of the assembly in a manufacturing plant. Alternatively, the resistance seam welding unit and any optic beam shaping components of the laser welding unit may be integrated into a single unit while the laser source itself is constituted by a separate unit. In any case, the integration of the two units is preferably done in a way so that each welding unit may be used separately, independent of the other, in order to further increase the usability of the inventive arrangement.

### Brief description of the drawings

The invention will hereinafter be described in closer detail by means of preferred embodiments thereof, with reference to the accompanying drawings, in which:
Fig 1 is a schematic perspective view of a welding assembly, arranged to perform a first embodiment of the inventive method.
Fig 2 discloses a first schematic example of an application in which the present inventive method may be utilised.
Fig 3 discloses is a second schematic example of an application in which the present inventive method may be utilised.
Fig 4 is a basic block diagram disclosing the steps of the inventive method.

### Description of preferred embodiments of the invention

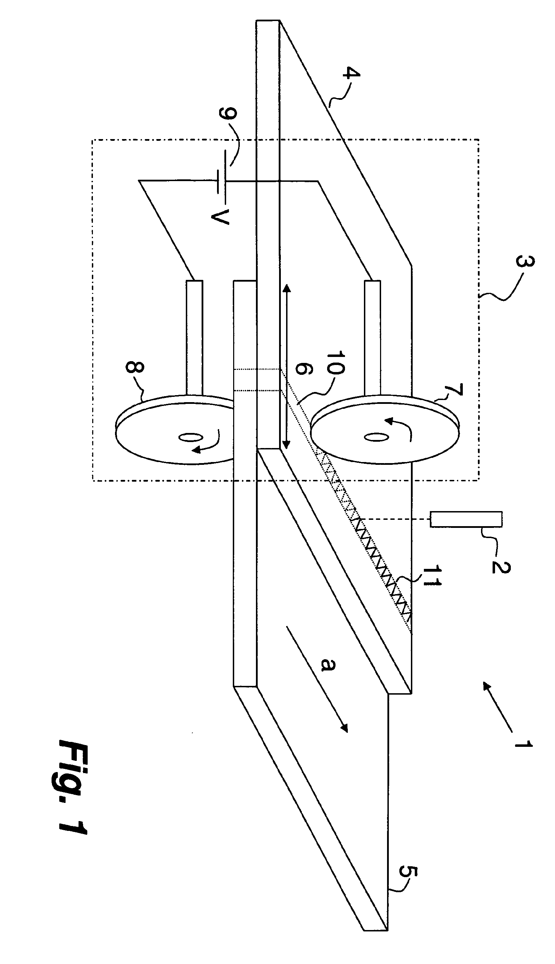

A first preferred embodiment of this invention will hereinafter be described with reference to fig 1. As disclosed in fig 1, a welding assembly 1, to be used for performing the inventive method, essentially comprises a resistance seam welding unit 3 and a laser welding unit 2, which may be integrated into a single welding unit, if desired.

The welding assembly 1 is generally to be used to interconnect at least a first and a second body part 4, 5, each body part being formed by a electrically conducting material, such as a steel sheet material, for instance DP600 steel, mild steel, DP steel or Boron alloy steel. The steel sheel material may be stamped, extruded or casted. The first and second body part 4,5 may be constituted by the same material or by different materials. An example of a typical material to be welded with this method is a coated or uncoated steel sheet material having a thickness of about 0,5-3 mm. Generally in may be said that the resistance seam welding unit 3 is first arranged to perform a resistance seam welding step on an overlapping area of said first and a second body part 4, 5 to be interconnected and thereafter, the laser welding unit 2 is arranged to perform a laser welding step, the resistance seam welding step and the laser welding step together forming a high quality weld 11 between the body parts, without imperfections like porosity, undercut or irregular weld geometry.

In the area in which said body parts 4, 5 are to be interconnected by means of a weld, the body parts are arranged to overlap each other in an overlapping area 6, comprising a welding zone 10 in which the weld is to be positioned. Thereafter, the overlapping area is entered into the welding unit 1. The positioning of the first and second body parts 4, 5 before entering the welding assembly 1 may be done in a plurality of ways which are known in the art, and this positioning is not closer described herein.

The resistance seam welding unit 3 essentially comprises a first and a second wheel shaped electrode 7, 8, the peripheral surfaces of which being biased against each other, so that the two wheel shaped electrodes apply a mechanical pressure on the overlapping area 6 of the first and second body parts 4, 5, the overlapping area 6 being arranged to pass between the peripheral surfaces of the first and second wheel shaped electrodes 7, 8 respectively. The first and second wheel shaped electrodes 7,8 are also connected to a power source 9, arranged to apply a potential difference V over the first and second wheel shaped electrodes 7,8. The potential difference over the electrodes results in an electrical current running through the electrically conducting first and second body parts 4, 5, between the electrodes. This electrical current start to melt the material in the welding zone 10 between the electrodes, and together with the force applied on the body parts by the electrodes, this results in a preclamping of the parts. Moreover, this also result in that residues and impurities present on the surfaces of the body parts are burnt off, leaving a clean surface on the body parts for the subsequent laser welding step. The power source 9 may for instance be an AC (alternate current) source, an MFDC (middle frequency direct current) source or a HFDC (high frequency direct current) source. Hence the two electrically conducting body parts 4,5 are pressed together by letting them pass between the two wheel shaped weld electrodes and at the same time, the electrodes conduct an electric current to the two pieces of metal as they are forged together.

Preferably, the pressure applied by the first and second wheel shaped electrodes on the body parts is in the interval 50-2000 daN and the current transmitted through the body parts by the electrodes is in the interval 3-50 kA. However, for certain applications, pressures and currents outside the above interval may be used.

The laser welding unit 2 essentially comprises a laser source, producing a laser energy beam, and suitable optics for achieving a desired radiation focus as the beam is directed towards the welding zone on the body parts 4, 5. The laser source may for instance be one of the following types: CO2, Nd:YAG, or diode laser. Further, the laser source may be operable in either continuous mode and/or pulsed mode, depending on desired functionality. Preferably, the laser source has a power of between 2-10 kW.

Preferably, the resistance seam welding unit 3 and the laser welding unit 2 are integrated into a single welding unit, facilitating the mounting of said welding unit in a factory or the like. Suitably, both the resistance seam welding unit 3 and the laser welding unit 2 is connected to a common control unit (not shown) which facilitates the cooperation and optimisation between the two welding units 2,3, regarding for instance choice of parameters for the welding units, as will be described below. This common control unit may also be used to control the total heat input from the resistance seam welding step and the laser welding step, which enables different weld results, in terms of different weld width and weld penetration.

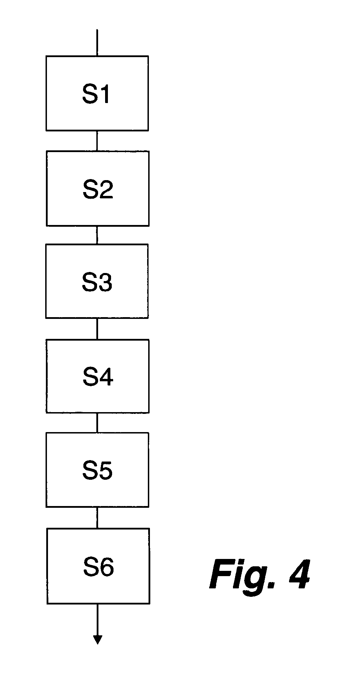

The method will hereinafter be described in closer detail, with reference to fig 4. For simplicity, the example is for simplicity directed towards interconnection of a first and a second body part. However, it shall be noted that the inventive method is especially suitable for interconnection of three or more body parts, arranged to overlap each other in an overlapping area in which the body parts are to be interconnected by a weld. The basic steps of this method are identical, irrespective of the number of body parts to be interconnected.

In a first step S1, a first and a second body part 4, 5 is arranged to overlap each other in an overlapping area 6, in which the body parts 4,5 are to be interconnected by means of a weld.

In a second step S2, the overlapping area 6 of the body parts 4, 5 are introduced into a welding assembly 1 as described above. The body parts 4, 5 are defined as introduced into the welding assembly 1 as soon as the body parts get in contact with the wheel shaped electrodes 7, 8, and the electrodes start to exert a pressure on the overlapping body parts. Thereafter, the relative speed between the body parts and the welding assembly is preferably held between 0.5-10 m/min. In the example disclosed in fig 1, the welding assembly is assumed to be stationary, while the body parts 4, 5 are moved through the welding assembly with the above speed in a direction, indicated by an arrow a in fig 1. However, the invention is equally applicable in robotised applications, in which the welding assembly is moveable in relation to the body parts.

In a third step S3, closely connected to step two, and may occur at the same point in time as the body parts get in contact with the wheel shaped electrodes 7, 8, a voltage difference V is applied over the wheel shaped electrodes 7, 8, resulting in a current I flowing through the first and second body parts 4, 5, between the wheel shaped electrodes 7, 8, hence performing a resistance seam welding process. As stated above, this current, together with the pressure exerted by the wheel shaped electrodes 7, 8, causes a preclamping of the body parts 4, 5 and at the same time, any residues and impurities are burnt of the surface. As stated above, the resistance seam welding unit may apply different pressure on the body parts, utilise different current levels etc, depending on what material the body parts 4, 5 are made from, material thickness, and depending on what weld type is to be performed. A man skilled in the art may easily choose suitable values for these parameters. This third step occurs continuously as long as the body parts are fed into the welding assembly and as long as the above voltage is applied.

In a forth step S4, an area which has been exposed to the resistance seam welding process exits from the wheel shaped electrodes 7, 8 and enters into a laser welding area, in which a laser welding step is to be performed on the corresponding area of the overlapping area 6 which previously in step S3 has been exposed to the resistance seam welding process.

In a fifth step S5, the above area is exposed to a laser welding step by exposing it to a laser beam generated by the laser source, the beam being shaped by suitable beam optics (not shown), if necessary. As stated above, the laser may be of different types, have different power and may be pulsed or continuous, depending on what material the body parts 4, 5 are made from, and depending on what weld type is to be performed. A man skilled in the art may easily choose suitable values for these parameters. This fifth step also step occurs continuously as long as the body parts are fed into the welding assembly and as long as laser source is on.

In a sixth step S6, the area that has been exposed to both the resistance seam welding step and the laser welding step exits from the laser welding area, and when cooled, the weld is finalized.

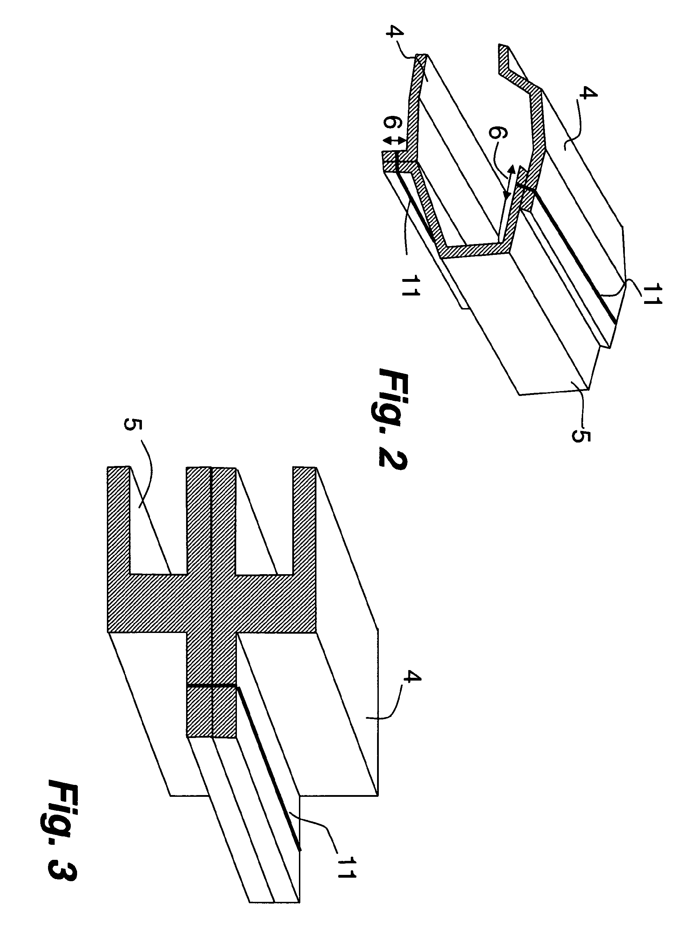

A first application of the inventive method is schematically disclosed in fig 2. According to this application, the inventive welding method is used to interconnect a first and a second sheet metal body part 4, 5 in order to form a profile to be used as a vehicle body pillar. Two different application examples are shown in fig 2, one in which the edges of the body parts overlap each other and one where the edges are shaped to form a flange, with the edges positioned side by side.

A second application of the inventive method is schematically disclosed in fig 3. According to this application, the welding assembly may be used to interconnect overlapping flange portions of a first and second body part, being formed by non-sheet material, but at least said flanges being formed as electrically conducting sheet-like material.ln this case, two overlapping flanges of a first and a second beam 4, 5, constituting body parts, are interconnected by means of the inventive method.

Finally it shall be noted that the invention has been described above and illustrated in the drawings by way of example only and that the skilled person will recognize that various modifications may be made without departing from the scope and spirit of the invention as defined by the appended claims.

For instance, the invention is not to be limited to a stack comprising only a first and a second overlapping body part, but may in fact be utilized for welding of a stack comprising three or more overlapping body parts, for instance being of different materials and/or having different thickness.

Further the inventive method is suitable for robot manufacturing, i.e., a vehicle body is stationary when welding, while the welding tool moves over the weld area. In robot manufacturing it may be suitable and flexible to use a laser source working with fiber optics, such as a YAG laser.

Also, the method may equally be used for continuous welding joints and stich welding joints.

### Nomenclature

- 1.: Welding arrangement
- 2.: Laser welding unit
- 3.: Resistance seam welding unit
- 4.: First body part
- 5.: Second body part
- 6.: Overlapping area
- 7.: First wheel shaped electrode
- 8.: Second wheel shaped electrode
- 9.: Power source
- 10.: Welding zone
- 11.: Weld

## Claims

1. A manufacturing method for interconnecting at least a first and a second body part (4, 5) of a sheet material to form a part of a vehicle body, the method comprising the steps of:
- arranging said first and second body parts (4, 5) so that they essentially overlap and abut each other in an overlapping area (6),
- exposing a welding zone (10) of said overlapping area (6) to a hybrid welding process in order to interconnect said first and second body parts (4, 5) in said overlapping area (6), the hybrid welding process comprising at least a first resistance seam welding step (S3) and a subsequent laser welding step (S5).

2. A manufacturing method according to claim 1, wherein the resistance seam welding step (S3) is arranged to provide preclamping between the first and second body part (4, 5), and also to pre-heat and burn of any surface residues from said body parts, before said laser welding step (S5).

3. A manufacturing method according to claim 1 or 2, further comprising the step of: controlling the individual heat input from at least one of said resistance seam welding step and said laser welding step in order to control at least one of weld width and weld penetration.

4. A manufacturing method according to any one of the preceding claims, wherein said laser welding step comprises the step of irradiating said overlapping area with a laser beam, generated by a laser source (2) being one of a CO2, NdYAG, diode laser or fiber laser.

5. A manufacturing method according to any one of the preceding claims, wherein said first and second body (4, 5) parts are manufactured by sheet material being electrically conducting.

6. A manufacturing method according to any one of the proceeding claims, wherein said first and second body parts are constituted by parts of one of an A, B, or C pillar of the vehicle body.

7. A manufacturing method according to claim 5, wherein said laser source (2) is one of a pulsed laser source or a continuous laser source.

8. Use of a manufacturing method according to any one of the claims 1-7 to interconnect three or more body parts in a single welding operation.

9. A motor vehicle comprising at least a first and second body part (4, 5) being welded together by means of the method according to any one of the claims 1-7.

10. A welding assembly for performing the method according to any one of the claims 1-7, comprising a resistance seam welding unit (3), for performing said resistance seam welding step and a laser welding unit (2), for performing said laser welding step.
